# EUROPÄISCHE PATENTSCHRIFT

(11) **EP 2 203 980 B1**
(45) Veröffentlichungstag und Bekanntmachung des Hinweises auf die Patenterteilung: **19.01.2011**
(21) Anmeldenummer: 08804789.9
(22) Anmeldetag: 26.09.2008
(51) Int. Cl.: H04B 1/08, B60R 11/02, B60K 37/02

(54) **MULTIMEDIASYSTEM FÜR EIN KRAFTFAHRZEUG**
MULTIMEDIA SYSTEM FOR A MOTOR VEHICLE
SYSTÈME MULTIMÉDIA POUR UN VÉHICULE AUTOMOBILE

(30) Priorität: 27.09.2007 DE 102007046166
(43) Veröffentlichungstag der Anmeldung: 07.07.2010
(73) Patentinhaber: Leopold Kostal GmbH & Co. KG, 58513 Lüdenscheid (DE)
(72) Erfinder: WELSCHHOLZ, Jörg, 58849 Herscheid (DE)
(74) Vertreter: Kerkmann, Detlef
(86) Internationale Anmeldenummer: PCT/EP2008/062911
(87) Internationale Veröffentlichungsnummer: WO 2009/043816

(56) Entgegenhaltungen:
- EP-A- 1 566 305
- EP-A- 1 790 529
- DE-U1- 29 909 912
- US-A- 6 093 977
- US-A1- 2006 046 778

## Beschreibung

Die Erfindung betrifft ein Multimediasystem für ein Kraftfahrzeug umfassend ein Autoradio, ein Display und Bedienelemente zur Bedienung des Multimediasystems, sowie eine Anschlussvorrichtung zum Anschließen eines externen, mobilen Medienabspielgeräts an das fahrzeugseitige System.

Derartige Einrichtungen, bei denen Audio- und Video-Geräte funktional miteinander verknüpft sind, kommen in Kraftfahrzeugen in zunehmendem Maße zum Einsatz. Als vorteilhaft wird hierbei unter anderem die zentrale Bedienbarkeit externer, insbesondere mobiler Geräte wie z.B. eines mp3-Players durch die Bedienelemente des Autoradios, sowie die Wiedergabe der auf dem mobilen Gerät gespeicherten Audio- und/oder Video-Inhalte über die fahrzeugseitig bereits vorhandenen Hifi- bzw. Video-Komponenten angesehen. Hierzu sind speziell ausgerüstete Autoradios verfügbar, wobei zum Anschließen eines externen, mobilen Medienabspielgeräts an das fahrzeugseitige System Kabelverbindungen verwendet werden, die das Autoradio mit dem mobilen Gerät verbinden, welches selbst z.B. in das Handschuhfach gelegt wird.

Die WO 2006/094281 A2 zeigt ein Multimediasystem für ein Kraftfahrzeug gemäß dem Oberbegriff des Patentanspruchs 1, bei dem verschiedene mobile Audio- oder Video-Geräte zur Integration in das fahrzeugseitige Audio- und Video-System an diesem angeschlossen werden.

US 6 093 977 A zeigt ein weiteres Multimediasystem für ein Fahrzeug.

Das Multimediasystem gemäß der vorliegenden Erfindung bietet in diesem Zusammenhang die Möglichkeit praktisch beliebige, bereits im Fahrzeug vorhandene Autoradios und Displaygeräte in das Gesamtsystem einzubinden.

Dies gelingt erfindungsgemäß dadurch, dass Bedienelemente zur Bedienung des Multimediasystems und die Anschlussvorrichtung zum Anschließen eines externen, mobilen Medienabspielgeräts in einem Bedien- und Schnittstellenmodul integriert sind, welches parallel zu dem Autoradio in einen Einbauschacht in der Mittelkonsole des Fahrzeugs platziert ist, und das Schnittstellen zur Verbindung mit dem Autoradio und dem Display aufweist.

In einer vorteilhaften Ausführungsform weist das Bedien- und Schnittstellenmodul einen Einschubschacht auf, in den das mobile Medienabspielgerät zum Anschließen an das System eingeführt wird. Dadurch kann auf Kabelverbindungen verzichtet werden, und das Medienabspielgerät ist sicher im Fahrzeug aufgehoben.

Das Display, auf dem beispielsweise Bedienmenüs, Abspiellisten oder Video-Inhalte dargestellt werden, ist in einer bevorzugten Ausführung Bestandteil eines Displaygeräts, das auf der Oberseite des Armaturenbretts angeordnet ist.

Bei dem Displaygerät kann es sich z.B. um ein mobiles Unterhaltungs-, Datenverarbeitungs- und/oder Kommunikationsgerät handeln, etwa ein mobiles Navigationsgerät oder ein PDA, welches in einem mechanische und elektrische Schnittstellen umfassenden Gerätehalter aufgenommen ist, welcher selbst Teil eines eine oberseitige, verschließbare Öffnung aufweisenden Faches ist.

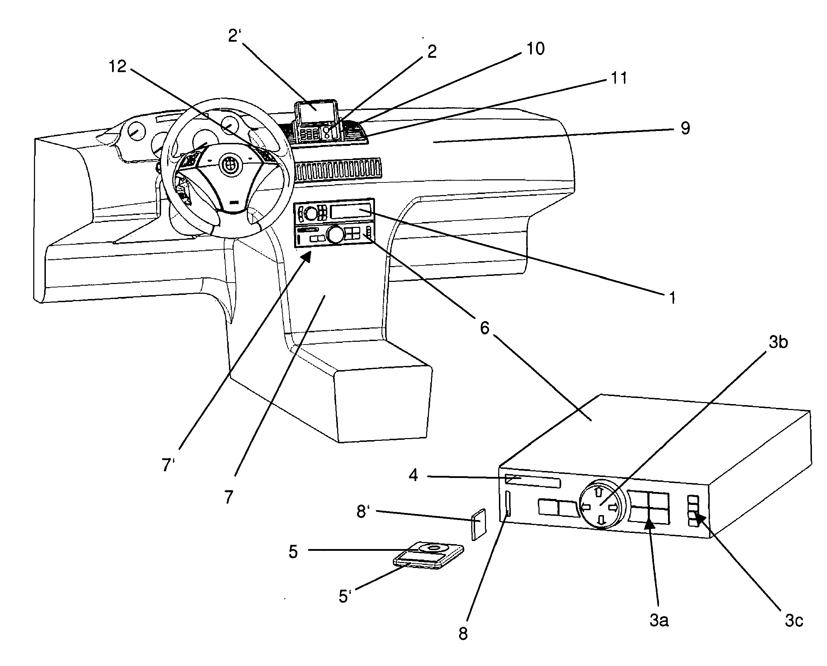

Weitere vorteilhafte Ausgestaltungen und Weiterbildungen des erfindungsgemäßen Multimediasystems werden anhand der Zeichnung erläutert. Dabei zeigt die einzige Figur eine Ansicht eines Armaturenbretts sowie einer Mittelkonsole eines Fahrzeugs, in der ein erfindungsgemäßes System angeordnet ist. In einer vergrößerten Detailansicht ist zusätzlich noch einmal das Bedien- und Schnittstellenmodul gezeigt.

Die in der Zeichnung dargestellte Innenansicht eines Cockpit-Bereichs eines Kraftfahrzeugs zeigt in der Mittelkonsole 7 ein Autoradio 1 sowie ein Bedien-und Schnittstellenmodul 6, die beide übereinander in einem doppelten DIN-Einbauschacht 7' angebracht sind. Bei dem Autoradio 1 kann es sich insbesondere um ein Standardgerät handeln, welches bereits herstellerseitig oder auch nachträglich eingebaut wird. Es bildet zusammen mit dem Bedien-und Schnittstellenmodul 6 und einem auf der Oberseite des Armaturenbretts 9 angeordneten Display 2' sowie mit weiteren Komponenten wie z.B. Verstärkern, Lautsprechern und ähnlichem die wesentlichen Bestandteile des erfindungsgemäßen Multimediasystems. Das Display 2' ist in diesem Falle Bestandteil eines hier beispielsweise als PDA ausgeführten Displaygeräts 2, das in diesem Zusammenhang zur Darstellung von Bedienmenüs, Abspiellisten oder etwa Video-Inhalten im Rahmen des Multimediasystems benutzt wird. Das Displaygerät 2 ist in einem Gerätehalter 10 aufgenommen, der mechanische und elektrische Schnittstellen zum Anschluss des Displaygeräts 2 an das Multimediasystem umfasst. Der Gerätehalter 10 ist selbst Teil eines eine oberseitige, verschließbare Öffnung aufweisenden Faches 11 und ist in diesem zwischen einer Gebrauchs- und einer Nichtgebrauchsstellung verschwenkbar gelagert, so dass das Displaygerät 2 im Falle des Nichtgebrauchs in dem verschlossenen Fach 11 verborgen bleiben kann.

Das Bedien- und Schnittstellenmodul 6, welches den zentralen Bestandteil des Multimediasystems bildet, weist an seiner Vorderseite Bedienelemente 3a, 3b, 3c zur Beeinflussung unterschiedlicher Funktionen auf. So sind beispielsweise Tasten 3a zur Auswahl der jeweiligen Funktion, wie etwa CD/DVD-Player, Radio, mp3-Player, Telefon, Video-Player oder weiterer vorgesehen. Ein zentrales Universalbedienelement in Form eines Drehstellers 3b ist insbesondere zur Bedienung von Menüfunktionen vorgesehen. Der Drehsteller 3b ist zusätzlich zu seiner Drehfunktion, die entsprechend der jeweils zu bedienenden Funktion ggf. etwa mit unterschiedlichen Rastungen oder Kraftverläufen versehen werden kann, mit einer Druckfunktion in Richtung seiner Drehachse sowie mit der Möglichkeit der Verschiebung oder Verschwenkung in zumindest zwei Achsen senkrecht zu seiner Drehachse, ähnlich einer Joystick-Funktion versehen.

Ein Einschubschacht 4 an der Vorderseite des Bedien- und Schnittstellenmoduls 6 ist zum Anschließen eines mobilen Medienabspielgeräts 5 an das System vorgesehen. Das mobile Medienabspielgerät 5, beispielsweise ein mp3-Player mit Multimediafunktion, wie etwa ein Apple iPod oder ein ähnliches Gerät, wird dazu in den Einschubschacht 4 eingeführt und in diesen entweder von Hand weiter eingedrückt oder automatisch eingezogen, bis seine Oberkante 5' bündig mit der Frontblende des Moduls 6 abschließt. Der an der in der Zeichnung verdeckten Unterseite des Medienabspielgeräts 5 vorhandene Anschlusssteckverbinder wird dabei mit einem im Inneren des Moduls angeordneten Gegensteckverbinder kontaktiert, und so die notwendigen Verbindungen hergestellt. Bei eingestecktem Medienabspielgerät 5 kann dieses dann über eine entsprechende Auswahltaste 3a als aktives Gerät angesprochen werden. Die üblicherweise an dem Medienabspielgerät 5 selbst vorgenommene Bedienung erfolgt dann über die Bedienelemente des Bedien- und Schnittstellenmoduls 6, beispielsweise über den Drehsteller 3b. Bestimmte Funktionen können ggf. auch durch weitere im Fahrzeug vorhandene Bedienelemente, z.B. Bedientasten 12, die im Lenkrad angeordnet sind, vorgenommen werden, wobei das Bedien- und Schnittstellenmodul 6 dazu die entsprechenden Schnittstellen zur Verfügung stellt.

Die Anzeige des in dem Einschubschacht verborgenen Displays des Medienabspielgeräts 5 wird auf das Displaygerät 2 auf der Oberseite des Armaturenbretts 9 umgeleitet. Zum Entnehmen des Medienabspielgeräts 5 aus dem Einschubschacht 4 des Bedien- und Schnittstellenmoduls 6 kann entweder eine Auswurftaste, wie von CD- oder Kassetten-Abspielgeräten bekannt, vorgesehen sein oder ein auf erneutes Drücken gegen die Oberkante 5' des Medienabspielgeräts 5 selber reagierender Auswurfmechanismus. Zusätzlich ist an der Vorderseite des Bedien- und Schnittstellenmoduls 6 ein Aufnahmeschlitz 8 zur Aufnahme eines Speichermoduls 8' wie etwa einer SD-Karte oder dergleichen vorhanden. Die auf einem solchen Speichermoduls 8' gespeicherten Audio-, Video- oder sonstigen Informationen können von dem Bedien- und Schnittstellenmodul 6 eingelesen und durch das Multimediasystem wiedergegeben oder weiterverarbeitet werden. In ähnlicher Weise kann auch z.B. eine Öffnung zum Anschließen eines USB-Speichersticks vorgesehen sein, in der dieser ganz oder zumindest teilweise aufgenommen ist.

An der Rückseite des Bedien- und Schnittstellenmoduls 6 sind, in der Zeichnung nicht dargestellt, Schnittstellen zur Verbindung desselben mit dem Autoradio 1 und dem Displaygerät 2 sowie ggf. mit weiteren Komponenten wie einer Freisprecheinrichtung für ein Handy, weiteren Bedienelementen, z.B. Bedientasten 12 im Lenkrad, oder dergleichen vorhanden. Über diese Schnittstellen werden die betreffenden Komponenten mittels geeigneter Verbindungskabel mit dem Bedien- und Schnittstellenmodul verbunden und so durch die funktionale Verknüpfung dieser Komponenten miteinander das Multimediasystem gebildet.

## Patentansprüche

1. Multimediasystem für ein Kraftfahrzeug umfassend ein Autoradio (1), ein Display (2') und Bedienelemente (3a, 3b, 3c) zur Bedienung des Multimediasystems, sowie eine Anschlussvorrichtung (4) zum Anschließen eines externen, mobilen Medienabspielgeräts (5) an das fahrzeugseitige System, **dadurch gekennzeichnet, dass** Bedienelemente (3a, 3b, 3c) zur Bedienung des Multimediasystems und die Anschlussvorrichtung (4) zum Anschließen eines externen, mobilen Medienabspielgeräts (5) in einem Bedien- und Schnittstellenmodul (6) integriert sind, welches parallel zu dem Autoradio (1) in einen Einbauschacht (7') in der Mittelkonsole (7) des Fahrzeugs platziert ist, und das Schnittstellen zur Verbindung mit dem Autoradio (1) und dem Display (2') aufweist.

2. Multimediasystem nach Anspruch 1, **dadurch gekennzeichnet, dass** das Bedien- und Schnittstellenmodul (6) einen Einschubschacht (4) aufweist, in den das mobile Medienabspielgerät (5) zum Anschließen an das System eingeführt wird.

3. Multimediasystem nach Anspruch 1 oder 2, **dadurch gekennzeichnet, dass** das Bedien- und Schnittstellenmodul (6) einen Einschubschlitz (8) für ein Speichermodul (8') aufweist.

4. Multimediasystem nach einem der Ansprüche 1 bis 3, **dadurch gekennzeichnet, dass** das Display (2') Bestandteil eines auf der Oberseite des Armaturenbretts (9) angeordneten Displaygerät (2) ist.

5. Multimediasystem nach Anspruch 4, **dadurch gekennzeichnet, dass** das Displaygerät (2) ein mobiles Unterhaltungs-, Datenverarbeitungs-und/oder Kommunikationsgerät ist, und in einem mechanische und elektrische Schnittstellen umfassenden Gerätehalter (10) aufgenommen ist.

6. Multimediasystem nach Anspruch 5, **dadurch gekennzeichnet, dass** der Gerätehalter (10) Teil eines eine oberseitige, verschließbare Öffnung aufweisenden Faches (11) ist.

## Claims

1. Multimedia system for a motor vehicle comprising a car radio (1), a display (2') and control elements (3a, 3b, 3c) for operating the multimedia system as well as a connection facility (4) for connecting an external, mobile media player device (5) to the on-board end of the system, **characterised in that** for the purpose of operating the multimedia system and the connecting facility (4) for connecting an external, mobile media player device (5), control elements (3a, 3b, 3c) are integrated into a control and interface module (6) which is positioned parallel to the car radio (1) in an installation bay (7') in the central console (7) of the vehicle and has interfaces for connecting to the car radio (1) and the display (2').

2. Multimedia system in accordance with Claim 1, **characterised in that** the control and interface module (6) has an installation bay (4) into which the mobile media player device (5) is inserted for the purpose of connecting to the system.

3. Multimedia system in accordance with Claim 1 or Claim 2, **characterised in that** the control and interface module (6) has an insertion slot (8) for a storage module (8').

4. Multimedia system in accordance with any of Claims 1 to 3, **characterised in that** the display (2') is a component of a display device (2) located on the upper side of the dashboard (9).

5. Multimedia system in accordance with Claim 4, **characterised in that** the display device (2) is a mobile entertainment, data processing and/or communication device and is accommodated in a device retainer (10) that incorporates mechanical and electrical interfaces.

6. Multimedia system in accordance with Claim 5, **characterised in that** the device retainer (10) is part of a compartment (11) having an opening on the upper side which can be closed.

## Revendications

1. Système multimédia pour un véhicule automobile, comprenant une autoradio (1), un écran de visualisation (2') et des éléments de commande (3a, 3b, 3c) pour la commande dudit système multimédia, ainsi qu'un dispositif de raccordement (4) pour raccorder au système, dans le véhicule automobile, un lecteur multimédia mobile, externe (5), **caractérisé en ce que** les éléments de commande (3a, 3b, 3c), destinés à la commande du système multimédia, et le dispositif de raccordement (4), destiné au raccordement d'un lecteur multimédia mobile, externe (5), sont intégrés dans un module de commande et d'interface (6), qui est placé parallèlement à l'autoradio (1) dans un compartiment encastré (7') dans la console centrale (7) du véhicule automobile, et qui présente des interfaces pour le raccordement de l'autoradio (1) et de l'écran de visualisation (2').

2. Système multimédia selon la revendication 1, **caractérisé en ce que** le module de commande et d'interface (6) présente un tiroir (4), dans lequel le lecteur multimédia mobile (5) peut être introduit pour le raccordement au système.

3. Système multimédia selon revendication 1 ou 2, **caractérisé en ce que** le module de commande et d'interface (6) présente une fente d'insertion (8) pour un module de mémorisation (8').

4. Système multimédia selon l'une des revendications 1 à 3, **caractérisé en ce que** l'écran de visualisation (2') est un composant d'un appareil d'affichage (2), qui est installé sur la face supérieure du tableau de bord (9).

5. Système multimédia selon la revendication 4, **caractérisé en ce que** l'appareil d'affichage (2) est un appareil de divertissement, de traitement de données et / ou de communication mobile et est logé dans un support d'appareil (10), qui comprend des interfaces électriques.

6. Système multimédia selon la revendication 5, **caractérisé en ce que** le support d'appareil (10) est un composant d'un compartiment (11), qui présente une ouverture supérieure, pouvant être fermée.
